# EUROPÄISCHE PATENTSCHRIFT

(11) **EP 0 974 309 B1**
(45) Veröffentlichungstag und Bekanntmachung des Hinweises auf die Patenterteilung: **10.08.2011**
(21) Anmeldenummer: 99111506.4
(22) Anmeldetag: 14.06.1999
(51) Int. Cl.: A61C 5/06, A61C 9/00, B05C 17/01

(54) **Applikator**
Applicator
Applicateur

(30) Priorität: 23.07.1998 DE 19833238
(43) Veröffentlichungstag der Anmeldung: 26.01.2000
(73) Patentinhaber: Ivoclar Vivadent AG, 9494 Schaan (LI)
(72) Erfinder: Winkler, Siegbert, 6800 Tisis/Feldkirch (AT)
(74) Vertreter: Baronetzky, Klaus

(56) Entgegenhaltungen:
- FR-A- 1 217 497
- US-A- 4 269 331
- US-A- 4 479 781
- US-A- 4 560 352

## Beschreibung

Die Erfindung betrifft einen Applikator für viskose Massen, insbesondere für Dentalmassen, gemäß dem Oberbegriff von Anspruch 1.

Die Druckschrift US-A-4 269 331 beschreibt eine Dosiervorrichtung für pastöse Massen, bei der ein Raststift in Sackbohrungen, die in regelmäßigen Abständen in die Spindel des Drehantriebes eingebracht sind, eingreift und damit eine feste Abgabemenge je Rastung garantieren soll.

In der Druckschrift US-A-4 479 781 wird ein Applikator mit einem Gewindebolzen, der über eine Mutter am Ende des Gehäuses angetrieben wird, beschrieben. Auch aus der DE-AS 27 41 185 ist ein derartiger Applikator bekannt. Bei dieser Lösung weist der Applikator ebenfalls einen Drehantrieb auf, der durch eine Mutter gebildet wird, die auf einem Gehäuse frei drehbar ist.

Die Gewindestange weist ein Trapezgewinde mit großer Steigung auf, und es ist eine Voreinstellung des Applikators durch eine Handhabe möglich, die auf die Gewindestange wirkt.

Die praktische Anwendung erfolgt so, dass die Handhabe endseitig der Gewindestange zwischen Daumen und Zeigefinger der betätigenden Hand festgeklemmt wird, und dann die Mutter mit dem Daumen gedreht wird. Hierdurch soll eine feinfühligere Betätigung möglich sein.

Das Austreiben oder Ausdrücken von viskosen Massen aus Hülsen, die Teile von Kapseln oder Patronen bilden können, erfordert je nach Anwendungsfall stark unterschiedliche Betätigungskräfte: wenn sehr flüssige, aber noch viskose Massen aus Hülsen mit kleinem Durchmesser ausgedrückt werden sollen, sind die Betätigungskräfte sehr gering. Wenn hingegen ziemlich viskose Massen aus Patronen mit recht großem Durchmesser - gegebenenfalls auch noch durch eine enge Tülle - ausgedrückt werden sollen, sind ziemlich hohe Betätigungskräfte erforderlich.

Zwar schlägt die genannte Auslegeschrift eine alternative Aus gestalzung des Applicators aus Metall vor. Dennoch ist sie aufgrund ihrer Dimensionierung und gerade wegen der recht großen Gewindesteigung hauptsächlich für Massen in dünnen Hülsen geeignet.

Um den unterschiedlichen Anwendungsfällen Rechnung zu tragen, werden heute vielfach komplett aufgebaute Spritzen als EinmalArtikel hergestellt und verwendet. Hierbei ist ein Drehantrieb vorgesehen, der in seiner Dimensionierung an die auszudrückende Masse angepaßt ist. Zwar läßt sich hierdurch eine recht genaue und den Erfordernissen entsprechende Dimensionierung erzielen. Nachteilig ist jedoch, daß erhebliche Mengen an Kunststoffabfällen entstehen, die gegebenenfalls auch die Menge der zu versorgenden Dentalmasse übersteigen.

Ferner sind in zahlreichen Ausgestaltungen im wesentlichen pistolenförmige Applikatoren bekannt geworden, in die sich meist eine Hülse mit Dentalmasse einsetzen läßt, und die durch Betätigung des Pistolengriffs ein Ausdrücken der Dentalmasse aus der Hülse erlaubt. Hierbei können Kräfte von beispielsweise bis zu der fünffachen Handkraft über entsprechende Untersetzungen des Pistolenhebels realisiert werden, um auch viskose Massen ausdrücken zu können.

Andererseits läßt sich ein Drehantrieb regelmäßig feiner dosieren, und ist auch dem Grunde nach je nach Auslegung für die Übertragung größerer Betätigungskräfte geeignet.

Ferner ist aus der FR 1.217.497 ein Applikator für viskose Massen gemäß präambel des Anspruchs 1 bekannt.

Daher liegt der Erfindung die Aufgabe zugrunde, einen Applikator gemäß dem Oberbegriff von Anspruch 1 zu schaffen, der von Prinzip her auch geeignet ist, Massen in Hülsen mit vergleichsweise großem Durchmesser, die zudem hochviskos sein können, auszudrücken, wobei dennoch eine schnelle Adaption an den Füllungszustand der Hülse möglich sein soll und außerdem noch keine separate und nach Gebrauch zu verwerfende Ausdrückvorrichtung für jede Hülse erforderlich ist.

Diese Aufgabe wird erfindungsgemäß durch Anspruch 1 gelöst. Vorteilhafte Weiterbildungen ergeben sich aus den Unteransprüchen.

Besonders günstig ist es, daß erfindungsgemäß ein Applikator vorgesehen ist, der trotz einer für große Betätigungskräfte geeigneten Gewindestange eine rasche Anpassung an den Füllungszustand der je verwendeten Hülse ermöglicht. Erfindungsgemäß läßt sich die Gewindestange über ein Drehantriebsrad, das bevorzugt in Schlitzen in einem hinteren Teil der Ausdrückvorrichtung geführt ist, an ihrem Ende bei nicht eingesetzter Hülse frei verschieben. Die erfindungsgemäßen Merkmale erlauben es, die Gewindestange zunächst rasch voreinzustellen und eine Position zu wählen, in welcher das vordere Ende oder der Spindelanschlag noch nicht an dem Kolben der Hülse anliegt. Die Hülse wird dann in die Ausdrückvorrichtung eingesetzt und dort verriegelt. Erst durch die Verriegelung wird die Gewindeposition aktiviert, so daß die Gewindestange nicht mehr axial verschieblich, sondern lediglich drehbar ist. In diesem Zustand läßt sich nun ausgesprochen feinfühlig und betätigungssicher die Dentalmasse ausdrücken.

Besonders günstig ist es, daß diese erfindungsgemäße Lösung sich mit vergleichsweise wenig aufwendigen Maßnahmen realisieren läßt. Erfindungsgemäß ist ein Aktivierungsglied vorgesehen, das bevorzugt als Druckglied ausgebildet ist und von dem rückwärtigen Ende der Hülse betätigt wird und auf Gewindebacken wirkt. Die Gewindebacken gleiten an Schrägflächen radial einwärts, so daß sie in ihrem maximal aneinander angenäherten Zustand wie eine fest mit dem Gehäuse der Ausdrückvorrichtung verbundene Mutter wirken. Die Länge der Gewindebacken ist bevorzugt noch etwas größer als der Durchmesser der Gewindestange, so daß eine gleichmäßige Kraftbeaufschlagung und eine recht geringe Flächenpressung möglich ist.

Trotz der großen Flexibilität des erfindungsgemäßen Applikators reicht die Verwendung einer einfachen Hülse als einziger Wegwerf-Bestandteil aus, wobei die Hülse bevorzugt einen kleinen Kolben führt, der von dem Spindelanschlag mit Druck beaufschlagt wird.

Bei Bedarf kann bevorzugt auch eine Adaption an Hülsen geringeren Durchmessers vorgenommen werden, beispielsweise indem ein Einsatzring in die Hülsenaufnahme der Ausdrückvorrichtung eingesetzt wird, in welchem die Hülse geringeren Durchmessers aufgenommen werden kann.

Die Hülse weist jedenfalls ein rückwärtiges Ende auf, das eine Anlagefläche für das erfindungsgemäße Druckglied bildet. Das Druckglied umgibt den Stempel oder Spindelanschlag kreissymmetrisch, so daß für eine gleichmäßige Druckverteilung Sorge getragen wird. Es überträgt die Druckkräfte der eingesetzten und für das Sperren verdrehten Hülse auf die Gewindebacken, die an Schrägflächen geführt sind und bei entsprechender Druckbeaufschlagung über das Druckglied nach radial einwärts gleiten. Um ein symmetrisches Gleiten sicherzustellen, können zwei voneinander axial beabstandete Schrägflächen vorgesehen sein, an denen die entsprechenden Gegenflächen der Gewindebacken gleiten.

Bevorzugt beträgt der Gleitwinkel der Gewindebacken etwa 45°, so daß sowohl die Schrägflächen der Gewindebacken als auch die diesen zugewandten und hierzu kongruenten Innenflächen der Ausdrückvorrichtung in diesem Winkel verlaufen.

Bevorzugt werden die Gewindebacken federbelastet nach außen gedrückt, so daß sie automatisch die Gewindestangen freigeben, wenn keine Hülse eingesetzt ist.

In einer bevorzugten Ausgestaltung weist der Drehantrieb ein versenkt ausgebildetes Drehantriebsrad auf. Der Applikator ist bevorzugt zweigeteilt ausgebildet und weist einen vorderen und einen hinteren Teil auf, die über ein Drehgelenk miteinander verbunden sind. Ein Drehantriebsrad läuft in Schlitzen drehfest mit dem hinteren Teil verbunden, so daß sich bei einer relativen Drehung des vorderen zum hinteren Teil das Drehantriebsrad und damit die Gewindestange in den Gewindebacken verdreht und ein Vortrieb erzeugt wird.

Besonders günstig in diesem Zusammenhang ist es, daß auch der hintere Teil festgehalten und der vordere Teil relativ zu diesem verdreht werden kann.

Bei einer alternativen Ausgestaltung ist der hintere Teil fest an dem vorderen Teil gelagert; ein Verdrehen des Drehantriebsrads erfolgt dann über einen Eingriff durch die Schlitze hindurch. In beiden Fällen ist eine ruhig handhabbare Abstützung am hinteren Teil der Ausdrückvorrichtung möglich.

Bei beiden Ausgestaltungen ist zudem in Abstimmung mit der Länge der Hülse, die die Dentalmasse aufnimmt, die verbleibende Restmenge der Dentalmasse gut ersichtlich; wenn das Drehantriebsrad nahezu an dem vorderen Ende des Schlitzes angekommen ist, geht auch die Dentalmasse zur Neige.

Die Kraftübertragung zwischen der Betätigungs- oder Gewindestange und den Gewindebacken hängt unter anderem auch von der Art des verwendeten Gewindes ab. Bevorzugt ist eine leicht kreisförmige Ausgestaltung des Gewindes, die den Vorteil hat, daß vergleichsweise geringe radial nach außen wirkende Kräfte bei der Gewindekraftübertragung erzeugt werden, so daß die beiden Gewindebacken nicht allzu starken divergierenden Kräften unterworfen sind.

Es versteht sich, daß anstelle der beschriebenen Ausgestaltung des Aktivierungsantriebs auch beliebige andere realisiert werden können, mit denen durch Einsetzen der Hülse die Gewindebacken in Gewindeeingriff gebracht werden. So ist es gemäß einer alternativen Ausgestaltung vorgesehen, über einen Stift oder eine Hülse einen Ring zu bewegen, der auf seiner Innenfläche einen Innenkonus aufweist. Der Innenkonus arbeitet zusammen mit entsprechend geformten Anlageflächen von Gewindebacken, die dementsprechend durch Verschieben des Innenkonus nach innen bewegt werden.

Ferner kann die Neigung der erfindungsgemäßen Schrägflächen in weiten Bereichen an die Erfordernisse angepaßt werden. Bevorzugt ist die Neigung der Schrägflächen so gewählt, daß bei Betätigung des Aktivierungsglieds sich die Gewindebacken von der zweiten in die erste Position um eine Wegstrecke bewegen, die etwas mehr als die Tiefe des Gewindes beträgt. Damit besteht eine gewisse Sicherheitsreserve, die verhindert, daß die Gewindebacken versehentlich das Gewinde nicht vollständig freigeben, wenn die zweite Position erreicht werden soll.

Die auf die Gewindebacken wirkende Federkraft ist bevorzugt so ausgerichtet, daß mindestens ein Teil der Kraftkomponente radial nach außen wirkt. Bei aus der Ausdrückvorrichtung entnommener Hülse ist damit gewährleistet, daß die Gewindebacken sicher in die zweite Position bewegt werden, wobei es gemäß dem bevorzugten Ausführungsbeispiel vorgesehen ist, daß die Federkraft der verwendeten Federn sich parallel zu den Schrägflächen erstreckt.

Ferner ist es besonders günstig, wenn die Hülse an ihrem rückwärtigen Ende Kragenvorsprünge aufweist, die an der Stirnseite zugleich eine Anlagefläche für das Druckglied bilden. Bevorzugt ist die Materialstärke der Kragenvorsprünge etwas größer als die Wandstärke der Hülse, so daß eine sichere Verankerung an entsprechenden Anlageschultern der Ausdrückvorrichtung auch bei hohen Ausdruckkräften gewährleistet ist.

In diesem Zusammenhang ist es auch günstig, wenn die Kragenvorsprünge recht breit ausgebildet sind, so daß sie die auftretende Belastung gut aufnehmen können; der von ihnen abgedeckte Winkel kann sich aufsumiert auf etwas weniger als etwa 180° belaufen. Dennoch läßt sich durch einfaches Verdrehen um beispielsweise etwas weniger als 45° - wenn vier Kragenvorsprünge und vier axial wirkende Anlageschultern verwendet werden - eine sichere Verankerung der Hülse in der Ausdrückvorrichtung gewährleisten. Das Verdrehen läßt sich in einfacher Weise nach der Art eines Bajonetts durch einen Drehanschlag begrenzen, der beispielsweise als Stift ausgeformt sein kann.

Weitere Einzelheiten, Vorteile und Merkmale ergeben sich aus der nachstehenden Beschreibung eines Ausführungsbeispiels der Erfindung anhand der Zeichnung.

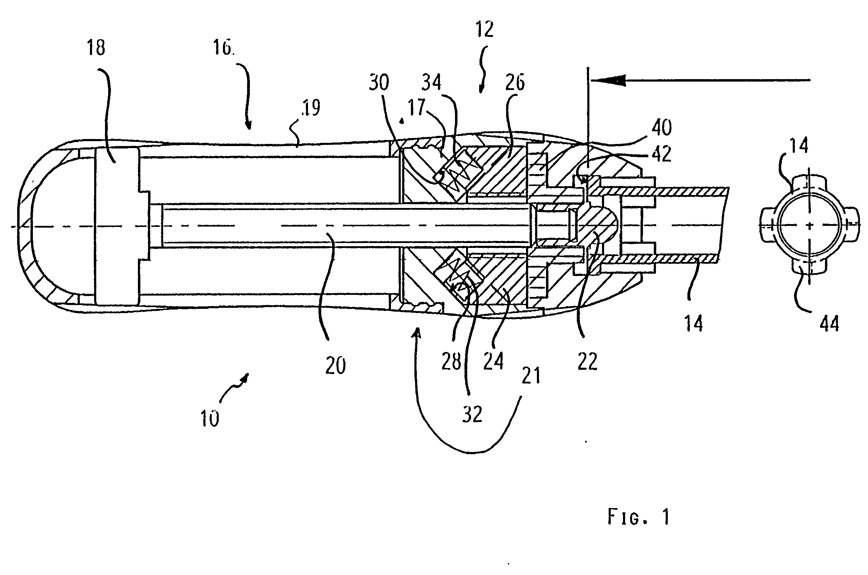

Es zeigen:
- Fig.: 1 eine Schnittansicht eines erfindungsgemäßen Appli- kators, und zusätzlich die Stellung der Hülse in dem Zustand gemäß Fig. 1;
- Fig. 2: eine weitere Schnittansicht des Applikators in der in Fig. 1 dargestellten Ausführungsform der Erfindung, wobei die Hülse in der Ausdrückvorrichtung verankert ist, und zusätzlich die Position der Hülse; und
- Fig. 3: eine Schnittansicht einer Hülse für die Verwendung in einer erfindungsgemäßen Ausdrückvorrichtung.

Ein Applikator 10 weist in dem in Fig. 1 dargestellten erfindungsgemäßen Ausführungsbeispiel eine Ausdrückvorrichtung 12 auf, in die eine Hülse 14 eingesetzt ist. Auch wenn die dargestellte Ausführungsform eine reine Hülse zeigt, versteht es sich, daß diese auch als Teil einer Kapsel oder Patrone ausgebildet sein kann, die ein unmittelbares Herausdrücken der dort aufgenommenen Dentalmasse über eine Austrittsspitze ermöglicht.

Der Applikator 10 weist ferner einen Drehantrieb 16 auf, der ein Drehantriebsrad 18 und eine Gewindestange 20 aufweist. Die Ausdrückvorrichtung 12 ist in der dargestellten Ausführungsform zweiteilig aufgebaut und weist einen vorderen Teil 17 auf, der gegenüber einem hinteren Teil 19 drehbeweglich ist. Das Drehantriebsrad 18 ist drehfest, jedoch axial beweglich mit dem hinteren Teil 19 verbunden. Der hintere und der vordere Teil sind über ein Drehgelenk 21 miteinander verbunden, das eine sichere axiale Abstützung, aber dennoch eine leichte Drehbarkeit bietet.

In einer modifizierten Ausgestaltung ist es auch möglich, den hinteren und den vorderen Teil 17 und 19 fest miteinander zu verbinden und einen Eingriff für das Drehen des dann dort drehbeweglich gelagerten Drehantriebsrads durch die Schlitze 52 und 54 zu erlauben. Bei diesem Ausführungsbeispiel ist das Drehantriebsrad 18 als Scheibe mit Vorsprüngen ausgebildet, die in Schlitzen 52, 54 laufen und mitgenommen werden.

In der in Fig. 1 dargestellten ersten Position besteht kein Gewindeeingriff eines Teils der Ausdrückvorrichtung 12 mit der Gewindestange 20. Damit ist die Gewindestange 20 als Betätigungsstange axial frei beweglich. An ihrem vorderen Ende ist sie drehbar an einem Stempel oder Spindelanschlag 22 gelagert, der eine kalottenförmige Spitze aufweist, die dafür bestimmt ist, den nicht dargestellten Kolben in der Hülse 14 mit Ausdrückkraft zu beaufschlagen.

Für den Gewindeeingriff sind zwei einander gegenüberliegende Gewindebacken 24 und 26 bestimmt, die sowohl radial als auch axial beweglich sind. Die Ausdrückvorrichtung 12 weist hierzu nach innen/vorne gewandte Schrägflächen 28 und 30 auf, die an entsprechend geformten Gegenflächen der Gewindebacken 24 und 26 anliegen. Über Druckfedern 32 und 34, die je teilweise in den Gewindebacken 24 und 26 aufgenommen sind, werden die Gewindebacken 24 und 26 an den Schrägflächen entlang nach vorne/außen gedrückt, so daß kein Gewindeeingriff vorliegt.

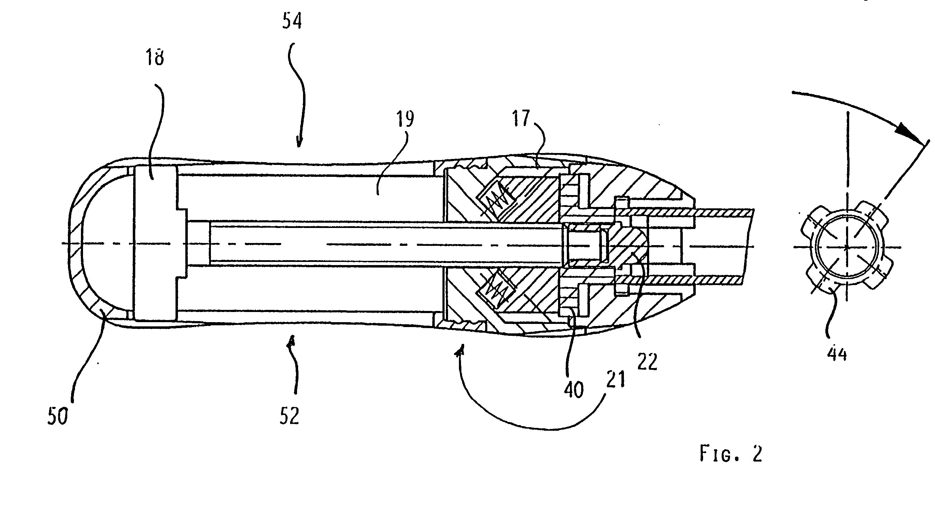

Die Gewindebacken sind je halbkreisförmig ausgebildet und weisen ein sich über je 180° erstreckendes Innengewinde auf, das so ausgelegt ist, daß sie in der in Fig. 2 dargestellten, zusammengeführten Position wie eine Mutter wirken.

Für die Betätigung der Gewindebacken ist ein Aktivierungsglied 40 vorgesehen, das als Druckglied sich zwischen den Gewindebacken 24 und 26 und einer Anlagefläche 42 der Hülse 14 erstreckt. Das Druckglied ist axial beweglich gelagert, dient jedoch zugleich der Abstützung auch des vorderen Endes der Gewindestange, die dort an dem Spindelanschlag 22 gelagert ist, in der Ausdrückvorrichtung 12.

Die Hülse 14 endet an ihrem rückwärtigen Ende in Kragenvorsprüngen 44, wobei in dem Ausführungsbeispiel gemäß Fig. 1 und 2 vier Kragenvorsprünge vorgesehen sind, die sich gleichmäßig verteilt um den Umfang der Hülse 14 erstrecken. Die Kragenvorsprünge 44 bilden mit entsprechenden axial wirkenden Ablageschultern der Ausdrückvorrichtung 12 eine Art Bajonettverschluß, so daß eine sichere Verankerung der Hülse 14 in der Ausdrückvorrichtung 12 möglich ist, wenn die in Fig. 2 dargestellte Position vorliegt.

Wie sich aus dem Vergleich der Figuren 1 und 2 ergibt, ist die Hülse in der in Fig. 2 dargestellten zweiten Position tiefer in die entsprechende Ausnehmung in der Ausdrückvorrichtung 12 eingesteckt. Sie ist zudem, wie sich aus der Darstellung rechts in Fig. 2 ergibt, um etwas weniger als 45° verschwenkt, so daß sie mit ihren Kragenvorsprüngen 44 Anlageschultern hintergreifen kann und auch durch erhöhte Druckkräfte nicht ausgedrückt wird. Über ihre Anlagefläche 42, die auch die Kragenvorsprünge 44 einschließt, betätigt sie das Aktivierungsglied 40, das dementsprechend in axialer Richtung nach hinten verschoben wird.

Das Aktivierungsglied 40 übt damit axialen Druck auf die Gewindebacken 26 aus, die an den ihnen zugeordneten Schrägflächen 28 und 30 gleitend dem Druck gegen die Federn 32 und 34 nachgebend sich nach radial einwärts und axial rückwärts bewegen. Es ist vorgesehen, daß die Bewegung in axialer Richtung so weit erfolgt, daß bei an den Anlageschultern anliegenden Kragenvorsprüngen 44 die Gewindebacken 24 und 26 sich in maximalem Gewindeeingriff befinden. In diesem Zustand sind die Druckfedern 32 und 34 maximal komprimiert, wobei sich die erforderliche Einsteckkraft der Hülse in die Ausdrückvorrichtung 12 einstellen läßt.

In der in Fig. 2 dargestellten zweiten Position läßt sich über das Drehantriebsrad 18 und den Spindelanschlag 22 die erforderliche Ausdrückkraft auf den Kolben der Hülse 40 ausüben.

Das in Fig. 1 und 2 dargestellte Ausführungsbeispiel bezieht sich auf das Ausdrücken einer noch vollen Hülse. In der Praxis ist es jedoch günstig, wenn mit der gleichen Ausdrückvorrichtung 12 auch verschiedene Hülsen 14 mit verschiedenen Materialien ausgedrückt werden können. Hierzu müssen die Hülsen 14 gewechselt werden, was erfindungsgemäß leicht möglich ist, indem die Hülse 14 entgegen der in Fig. 2 rechts dargestellten Pfeilrichtung zurückgedreht wird, so daß sie aus der Ausdrückvorrichtung 12 entnommen werden kann.

Wenn eine teilentleerte Hülse weiter entleert werden soll, wird hierzu zunächst das Drehantriebsrad 18 axial nach vorne verschoben, bis der Spindelanschlag an dem Kolben anliegt. Nachdem die Gewindestange ohne Gewindeeingriff recht leichtgängig axial gleitet, läßt sich dieser Zustand ohne weiteres erfassen. Bevorzugt wird die Gewindestange dann wieder um ein kurzes Stück zurückgezogen, beispielsweise um etwa 2 bis 3mm. Dadurch läßt sich erreichen, daß das Einsetzen der Hülse 14 in die Ausdrückvorrichtung 12 nicht bereits zum Ausdrücken von Dentalmasse führt. In diesem Zustand liegt dann der Spindelanschlag 22 knapp vor dem Kolben der Hülse, und das Drehantriebsrad 18 befindet sich etwa auf der Hälfte des möglichen Betätigungswegs, wobei durch Einsetzen der Hülse 14 wiederum der Gewindeeingriff zu den Gewindebacken 24 und 26 hergestellt wird, so daß das Ausdrücken beginnen kann.

Bevorzugt weist der hintere Teil 19 eine Abrundung 50 auf, so daß die Ausdrückvorrichtung 12 an ihrem hinteren Ende ballig handfreundlich ausgebildet ist. Dies erlaubt eine gute Führung mit der Hand, wenn axialer Druck beim Ausdrücken ausgeübt werden soll.

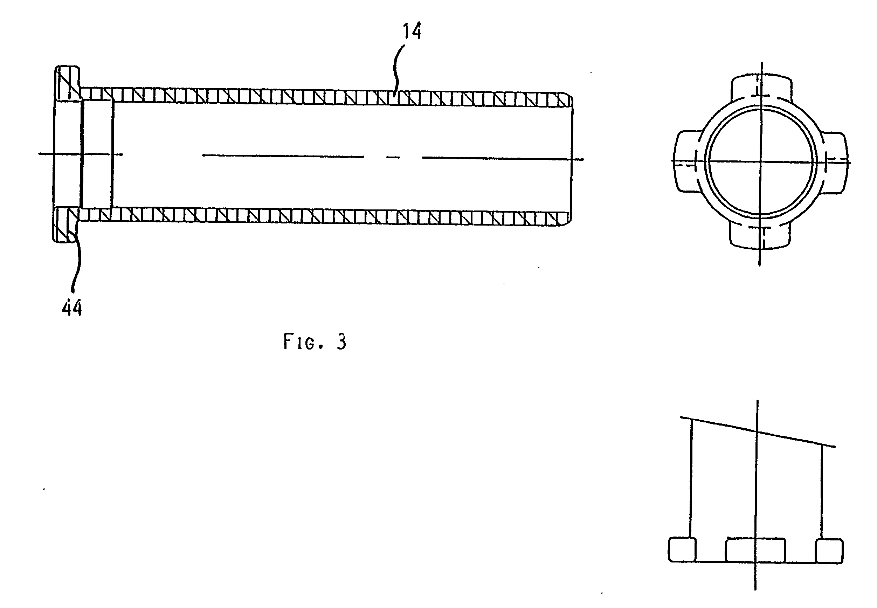

In Fig. 3 ist eine Hülse 14 im Schnitt dargestellt. Die axiale Länge der Hülse 14 ist etwas geringer als die axiale Länge der Schlitze 52 und 54, so daß mit der erfindungsgemäßen Ausdruckvorrichtung 12 stets ein volles Ausdrücken der in der Hülse 14 aufgenommenen Dentalmassen möglich ist.

Wie aus Fig. 3 ersichtlich ist, ist die Stärke der Kragenvorsprünge 44 etwas größer, beispielsweise doppelt so groß, wie die Wandstärke der Hülse, so daß eine sichere Verankerung möglich ist.

Es versteht sich, daß anstelle der Hülse 14 auch eine vollständige Patrone eingesetzt werden kann, die ein Austrittsende aufweist, in das bevorzugt der entsprechend geformte Kolben eindringen kann, um die Dentalmasse so vollständig wie möglich ausdrücken zu können.

## Patentansprüche

1. Applikator für viskose Massen, insbesondere für Dentalmassen, bei welchem eine Hülse (14) in einer Ausdrückvorrichtung (12) gelagert ist, wobe die Ausdrückvorrichtung (12) ein Aktivierungsglied (40) und ein Drehantrieb (16) aufweist, mit welchem über einen Stempel (22) Druck auf die in der Hülse (14) aufgenommenen Massen, ausübbar und die Massen aus der Hülse (14) ausdrückbar sind, wobei das Aktivierungsglied (40) bei in der Ausdrückvorrichtung (12) eingesetzten Hülse (14) einen Gewindeeingriff des Drehantriebs (16) herstellt und mit dem der Vortrieb des Stempels (22) bei Betätigung des Drehantriebs (16) aktivierbar ist; und der Drehantrieb (16) eine Gewindestange (20) und mindestens zwei einander gegenüberliegende, mit der Gewindestange (20) in Gewindeeingriff bringbare Gewindebacken (24, 26) aufweist, die quer zur Achse des Drehantriebs (16) beweglich gelagert sind, **dadurch gekennzeichnet, dass** die Hülse (14) in der Ausdrückvorrichtung (12) losbar gelagert ist und dass die Ausdrückvorrlchtung (12) Schrägflächen (28, 30) aufweist, an denen Gewindebacken (24, 26) über entsprechende Schrägflächen (28, 30) gleitbeweglich gelagert sind und in einer ersten Position in Gewindeeingriff mit einer Gewindestange (20) des Drehantriebs (16) stehen und in einer zweiten Position außer Eingriff stehen.

2. Applikator nach Anspruch 1, **dadurch gekennzeichnet, dass** die Hülse (14) einen Kolben führt und die Masse aufnimmt, wobei die Hülse (14) ein Austrittsende für die Masse aufweist.

3. Applikator nach einem der vorhergehenden Ansprüche, **dadurch gekennzeichnet, dass** das Aktivierungsglied (40) an einer Anlagefläche (42) an einem rückwärtigen Ende der Hülse (14) anliegt und als Druckglied für die Gewindebacken (24, 26) ausgebildet ist.

4. Applikator nach einem der vorhergehenden Ansprüche, **dadurch gekennzeichnet, dass** die Gewindebacken (24, 26) für die Herstellung eines Gewindeeingriffs zwischen Drehantrieb (16) und Ausdrückvorrichtung (12) in eine zweite Position, in der sie außer Eingriff der Gewindestange (20) des Drehantriebs (16) stehen, federbelastet in der Ausdrückvorrichtung (12) gelagert sind.

5. Applikator nach einem der vorhergehenden Ansprüche, **dadurch gekennzeichnet, dass** die Hülse (14) auswärts gewandte Kragenvorsprünge (44) aufweist, über welche sie in der Ausdrückvorrichtung (12), insbesondere an dort vorgesehenen Hinterschneidungen, verankerbar ist.

6. Applikator nach einem der vorhergehenden Ansprüche, **dadurch gekennzeichnet, dass** eine Mehrzahl von Kragenvorsprüngen (44), insbesondere vier Kragenvorsprünge (44), gleichmässig um den Umfang des hinteren Endes der Hülse (14) verteilt sind und eine gleiche Anzahl von in axialer Richtung wirkenden Anlageschultern der Ausdrückvorrichtung (12) für das Hintergreifen der Kragenvorsprünge (44) geeignet ausgebildet ist, und dass die Hülse (14) nach Einführen in die Ausdrückvorrichtung (12) und Verdrehen um einen vorgegebenen Winkel arretierbar ist.

7. Applikator nach einem der vorhergehenden Ansprüche, **dadurch gekennzeichnet, dass** die Hülse (14) gegen den Widerstand eines Druckglieds, das mindestens ein Teil des Aktivierungsglieds (40) ist, federbelastet in die Ausdrückvorrichtung (12) einführbar ist.

8. Applikator nach einem der vorhergehenden Ansprüche, **dadurch gekennzeichnet, dass** der Drehantrieb (16) einen Spindelanschlag (22) aufweist, der drehfest an der Gewindestange (20) des Drehantriebs (16) gelagert ist.

9. Applikator nach einem der vorhergehenden Ansprüche, **dadurch gekennzeichnet, dass** die Hülse (14) mit ihrem rückwärtigen Ende versenkt in der Ausdrückvorrichtung (12) aufgenommen ist, insbesondere etwa in einer Tiefe, in die sie einsteckbar ist, die ihrem Durchmesser entspricht.

10. Applikator nach einem der vorhergehenden Ansprüche, **dadurch gekennzeichnet, dass** die Gewindebacken (24, 26), die in der Ausdrückvorrichtung (12) beweglich gelagert sind, eine Schrägfläche aufweisen, deren Normale nach aussen und in eine von der Hülse (14) abgewandte Richtung weist und die für die Anlage an einer schräg nach innen weisenden Innenfläche der Ausdrückvorrichtung (12) bestimmt ist, deren Form an die Ausgestaltung der Schrägfläche angepasst ist, und dass die Schrägfläche sich mindestens über einen Teil der Länge der Gewindebacken (24, 26) erstreckt.

11. Applikator nach einem der vorhergehenden Ansprüche, **dadurch gekennzeichnet, dass** die Federbelastung der Gewindebacken (24, 26) und der Hülse (14) durch die gleichen Druckfedern (32, 34) realisiert ist.

12. Applikator nach einem der vorhergehenden Ansprüche, **dadurch gekennzeichnet, dass** die Ausdrückvorrichtung (12) einen vorderen Teil (17) und einen hinteren Teil (19) aufweist, die an einem Drehgelenk (21) drehbeweglich aneinander gelagert sind.

## Claims

1. An applicator for viscous compounds, in particular dental compounds, in which a sleeve (14) is mounted within an ejection device (12), wherein the ejection device (12) comprises an actuator (40) and a rotary drive (16) by means of which pressure may be exerted on the compounds contained within the sleeve (44) via a plunger (22) and the compounds may be ejected from the sleeve (14), wherein the actuator (40) forms a threaded engagement of the rotary drive (16) with the sleeve (14) inserted into the ejection device (12) and with the aid of which the advance of the plunger (22) may be activated upon actuation of the rotary drive (16); and wherein the rotary drive (16) comprises a threaded rod (20) and at least two threading dies (24, 26) opposite one another that may be brought into threaded engagement with the threaded rod (20), wherein said threading dies (24, 26) are movably supported in a direction perpendicular to the axis of rotation of said rotary drive (16), **characterized in that** the sleeve (14) is detachably mounted within the ejection device (12) and **in that** the ejection device (12) comprises slanted surfaces (28, 30) on which threading dies (24, 26) are slidingly supported via respective slanted surfaces (28, 30) and, in a first position are in threaded engagement with a threaded rod (20) of the rotary drive (16) and, in a second position are disengaged therefrom.

2. The applicator according to claim 1, **characterized in that** the sleeve (14) guides a piston and receives the compound, said sleeve (14) comprising an outlet end for the compound.

3. The applicator according to one of the preceding claims, **characterized in that** the actuator (40) at an abutment surface (42) thereof abuts on a rearward end of the sleeve (14) and is formed as a pressure element for the threading dies (24, 26).

4. The applicator according to one of the preceding claims, **characterized in that** the threading dies (24, 26) are mounted within the ejection device (12) in a spring-loaded manner in order to form a threaded engagement between the rotary drive (16) and the ejection device (12) at a second position, at which they are disengaged from the threaded rod (20) of the rotary drive (16).

5. The applicator according to one of the preceding claims, **characterized in that** the sleeve (14) comprises outwardly facing collar projections (44) with the aid of which the sleeve (14) can be anchored in the ejection device (12), in particular at recesses or indentations provided therein.

6. The applicator according to one of the preceding claims, **characterized in that** a plurality of collar projections (44), in particular four collar projections, are uniformly distributed about the circumference of the rear end of the sleeve (14) and an equal number of abutment shoulders of the ejection device (12) acting in the axial direction is formed in a suitable manner for engaging behind the collar projections (44), and **in that** the sleeve (14) after insertion into said ejection device (12) and rotation about a given angle, can be locked.

7. The applicator according to one of the preceding claims, **characterized in that** the sleeve (14) may be inserted into the ejection device (12) in a spring-loaded manner against the resistance of a pressure member that forms at least part of the actuator (40).

8. The applicator according to one of the preceding claims, **characterized in that** the rotary drive (16) comprises a spindle abutment (22) connected to the threaded rod (20) of the rotary drive (16) in a rotationally fixed manner.

9. The applicator according to one of the preceding claims, **characterized in that** the sleeve (14) with its rearward end is received within the ejection device (12) in a recessed manner, in particular approximately at a depth into which it is insertable and which corresponds to its diameter.

10. The applicator according to one of the preceding claims, **characterized in that** the threading dies (24, 24) that are movably supported in the ejection device (12), comprise a slanted surface having a normal pointing radially outwardly in a direction away from said sleeve (14) and being intended for the abutment on a slanted radially inwardly facing surface of the ejection device (12), whose shape is adapted to the design of the slanted surface, and that the slanted surface extends over at least a part of the length of the threading dies (24, 26).

11. The applicator according to one of the preceding claims, **characterized in that** the spring loading of the threading dies (24, 26) and the sleeve (14) is effected by means of the same pressure springs (32, 34).

12. The applicator according to one of the preceding claims, **characterized in that** the ejection device (12) comprises a front part (17) and a rear part (19) that are connected to each other at a pivot joint (21) in a rotationally movable manner.

## Revendications

1. Applicateur pour des masses visqueuses, en particulier pour des masses dentaires, avec lequel une gaine (14) est logé dans un dispositif d'éjection (12), où le dispositif d'éjection (12) présente un élément d'activation (40) et une commande rotative (16), par laquelle de la pression este exerçable sur la masse insérée dans la gaine (14) par l'intermédiaire d'un poinçon (22) et la masse est éjectable de la gaine (14), où l'organe d'activation (40) lors de l'insertion du dispositif d'éjection (12) dans la gaine (14) produit une vis d'entrainement de la commande rotative (16) et est activable à l'avancée du poinçon (22) pour l'actionnement de la commande rotative (16) ; et la commande rotative (16) présente une tige filetée (20) et au moins deux mâchoires filetées (24, 26) opposées qui peuvent être mise en prise de filetage avec la tige filetée (20), qui sont logées mobiles, transversales à l'axe de la commande rotative (16), **caractérisé en ce que** la gaine (14) du dispositif d'éjection (12) est monté amovible et que le dispositif d'éjection (12) présente des surfaces inclinées (28, 30) où des mâchoires filetées (24, 26) sont logées coulissantes par des surfaces inclinées correspondantes (28, 30) et sont en engagement fileté avec une tige filetée (20) de la commande rotative (16) dans une première position et dégagées du filetage dans une deuxième position.

2. Applicateur selon la revendication 1, **caractérisé en ce que** la gaine (14) conduit un piston et accueille la masse, où la gaine (14) présente une extrémité de décharge pour la masse.

3. Applicateur selon l'une des revendications précédentes, **caractérisé en ce que** l'élément d'activation (40) s'appuie sur une surface d'appui (42) à une extrémité de derrière de la gaine (14) et est conçu comme élément de pression pour les mâchoires filetées.

4. Applicateur selon l'une des revendications précédentes, **caractérisé en ce que** les mâchoires filetées (24, 26) pour produire un engagement fileté entre l'actionneur (16) et un dispositif d'éjection (12) sont montées sous l'action d'un ressort dans le dispositif d'éjection (12) dans une deuxième position, dans laquelle elles sont dégagées de la tige filetée (20) du disque rotatif (16).

5. Applicateur selon l'une des revendications précédentes, **caractérisé en ce que** la gaine (14) présente des collets en saillie tournés vers l'extérieur (44), par lesquels elle peut être ancré dans le dispositif de l'éjection (12), en particulier sur des contre-dépouilles s'y trouvant.

6. Applicateur selon l'une des revendications précédentes, **caractérisé en ce qu'**une pluralité de collets en saillie (44), de préférence quatre collets en saillie (44), sont distribués uniformément autour de la circonférence de l'extrémité arrière de la gaine (14) et un nombre égal d'épaules d'appui du dispositif d'éjection (12) est configuré adapté pour s'engager derrière les collets en saillie (44), agissant dans le sens axial, et **en ce que** la gaine (14), après son insertion dans le dispositif d'éjection (12) et sa rotation autour d'un angle donné, est verrouillable.

7. Applicateur selon l'une des revendications précédentes, **caractérisé en ce que** la gaine (14) peut être introduite sous l'action d'un ressort contre la résistance d'un élément de pression, qui est au moins une partie de l'élément d'activation (40), dans le dispositif d'éjection (12).

8. Applicateur selon l'une des revendications précédentes, **caractérisé en ce que** la commande rotative (16) présente un butoir de broche (22), qui est monté de manière fixe sur la tige filetée (20) du disque rotatif (16).

9. Applicateur selon l'une des revendications précédentes, **caractérisé en ce que** la gaine (14) est accueillie avec son extrémité arrière encastré dans le dispositif de d'éjection (12), de préférence approximativement dans une profondeur dans laquelle elle est insérable, qui correspond à son diamètre.

10. Applicateur selon l'une des revendications précédentes, **caractérisé en ce que** les mâchoires filetées (24, 26) qui sont montés mobiles dans le dispositif d'éjection (12), présentent une surface inclinée vers l'extérieur dont la normale indique vers l'extérieur et dans un sens opposée par rapport à la gaine (14) et qui est établie pour l'appui sur une surface interne oblique tournée vers l'intérieur du dispositif d'éjection (12), dont la forme est adaptée à la conception de la surface inclinée et **en ce que** la surface inclinée s'étend sur au moins une partie de la longueur des mâchoires filetées (24, 26).

11. Applicateur selon l'une des revendications précédentes, **caractérisé en ce que** la charge par ressort des mâchoires filetées (24, 26) et de la gaine (14) est réalisé par les mêmes ressorts (32, 34).

12. Applicateur selon l'une des revendications précédentes, **caractérisé en ce que** le dispositif d'éjection (12) présente une partie devant (17) et une partie de derrière (19) qui sont configurées rotatives l'une par rapport a l'autre sur une articulation pivotante (21).
